# EUROPÄISCHE PATENTSCHRIFT

(11) **EP 1 140 474 B1**
(45) Veröffentlichungstag und Bekanntmachung des Hinweises auf die Patenterteilung: **02.05.2003**
(21) Anmeldenummer: 00901562.9
(22) Anmeldetag: 15.01.2000
(51) Int. Cl.: B29C 65/08

(54) **VERFAHREN ZUM KONSTANTHALTEN DER MITTLEREN SPALTBREITE ZWISCHEN EINER SONOTRODE EINES ULTRASCHALL-SYSTEMS UND EINEM ALS GEGENFLÄCHE AUSGEBILDETEN WERKZEUG EINER ULTRASCHALL-SCHNEIDEINRICHTUNG**
METHOD FOR KEEPING CONSTANT THE MEAN GAP WIDTH BETWEEN A SONOTRODE OF AN ULTRASOUND SYSTEM AND A TOOL CONFIGURED AS A COUNTER SURFACE AND FORMING PART OF AN ULTRASONIC CUTTING DEVICE
PROCEDE POUR MAINTENIR CONSTANTE LA LARGEUR MOYENNE DE L'ESPACE ENTRE UNE SONOTRODE D'UN SYSTEME A ULTRASONS ET UN OUTIL, SE PRESENTANT SOUS LA FORME D'UNE SURFACE CORRESPONDANTE, D'UNE UNITE DE COUPE A ULTRASONS

(30) Priorität: 15.01.1999 DE 19902827
(43) Veröffentlichungstag der Anmeldung: 10.10.2001
(73) Patentinhaber: Dr. Hielscher GmbH, 14513 Teltow (DE)
(72) Erfinder: ELLNER, Frank, D-78056 Villingen-Schwenningen (DE); HIELSCHER, Harald, D-14532 Stahnsdorf (DE)
(74) Vertreter: Hengelhaupt, Jürgen D., Dipl.-Ing.
(86) Internationale Anmeldenummer: EP0000262
(87) Internationale Veröffentlichungsnummer: WO00041873

(56) Entgegenhaltungen:
- DE-A- 4 439 284
- DE-C- 4 317 621
- FR-A- 2 490 543
- US-A- 5 749 987
- PATENT ABSTRACTS OF JAPAN vol. 013, no. 154 (M-814), 14. April 1989 (1989-04-14) & JP 63 315223 A (HITACHI CONSTR MACH CO LTD), 22. Dezember 1988 (1988-12-22)

## Beschreibung

Die Erfindung betrifft ein Verfahren zum Konstanthalten der mittleren Spaltbreite zwischen einer Sonotrode eines Ultraschall-Systems und einem als Gegenfläche ausgebildeten Werkzeug einer Ultraschall-Schneideinrichtung zum Schneiden und/oder Verschweißen von unterschiedlichen Materialien, wie zum Beispiel von Kunststoffolien, kunststoffhaltigen Textilgeweben, gemäß dem Oberbegriff des Anspruchs 1. Ein solches Verfahren ist aus DE-A-44 39 284 bekannt.

Um Ultraschall zu erzeugen und in ein Medium mit einer gewünschten Leistung einzubringen, werden prinzipiell ein Ultraschall-Wandler (λ/2-Schwinger), der die eingebrachte elektrische Energie in mechanische Schwingungen umwandelt, und eine Sonotrode bzw. ein Horn verwendet.

Die Sonotrode ist als ein Werkzeug anzusehen, über das die Ultraschallleistung an den Wirkungsort geleitet wird.

Nach dem allgemeinen Stand der Technik wird die Materialbahn oder die übereinandergelegten Materialbahnen zwischen einem Gegenwerkzeug, zum Beispiel einem Schneidwerkzeug, und der Ultraschalleinheit geführt.

Die in das Material übertragenen Längsschwingungen bewirken eine Erwärmung bzw. ein Spalten des Materials und damit den Schweiß- und/oder Schneidvorgang.

Zur Erlangung einer gleichbleibenden optimalen Schweißund Schneidqualität sowie zur Minimierung des Schneidwerkzeugverschleißes ist die Einstellung einer optimalen und konstanten mittleren Schweiß- und/oder Schneidspaltbreite zwischen der Sonotrode und dem Werkzeug von Wichtigkeit.

In der DE 44 39 284 A1 wird eine Vorrichtung zum fortlaufenden Ultraschallbearbeiten einer Materialbahn beschrieben, bei der der Spalt zwischen der Sonotrode und dem Gegenwerkzeug einstellbar ist. Die Ultraschallschwingeinheit wird über eine temperaturgeführte Verstelleinrichtung starr mit dem Maschinenständer verbunden. Mittels der temperaturgeführten Verstelleinrichtung sollen temperaturbedingte Längenänderungen in der Ultraschallschwingeinheit ausgeglichen werden, so daß der Schweiß- und Schneidspalt eine gleichbleibende Größe aufweist.

Nachteilig ist es dabei, daß nur die temperaturbedingten Längenänderungen, nicht aber Längenänderungen der beteiligten Bauteile erfaßt und kompensiert werden, die sich aus der Materialelastizität und dem Verschleiß des Werkzeuges ergeben und zum Beispiel nach dem Durchlauf einer Materialbahn einige µm betragen können.

Der Erfindung liegt daher die Aufgabe zugrunde, ein gattungsgemäßes Verfahren zum Konstanthalten der mittleren Spaltbreite einer Ultraschall-Schneideinrichtung zu entwickeln, mit dem die Mängel der bekannten Verfahren und Einrichtungen vermieden werden und mit der gewährleistet ist, daß unterschiedliche Materialien, insbesondere Kunststoffolien, zuverlässig und effektiv mit gleichbleibender Qualität durch die von äußeren Einflußfaktoren unabhängige Regelung einer konstanten, definierten optimalen Spaltbreite geschweißt und/oder geschnitten werden können.

Erfindungsgemäß wird diese Aufgabe durch die Merkmale des Anspruchs 1 gelöst. Danach wird die Berührungszeit zwischen der Sonotrode und einer Berührfläche zum Konstanthalten des Abstandes zwischen der Sonotrode und mindestens einer Gegenfläche über eine Regelung konstant gehalten. Die Regelung besteht nach einer bevorzugten Ausführungsform entsprechend Anspruch 2 aus zwei Regelkreisen, die miteinander verknüpft sind. Mit einem ersten schnellen Regelkreis wird mit elektronischen Mitteln laufend die Amplitude des schwingenden Systems (Ultraschall-System) korrigiert und damit die Berührungszeit bei schnellem Lastwechsel konstant gehalten. Mit einem zweiten langsameren Regelkreis, dessen Regelzeit aber schneller ist als die Temperaturänderung des Systems, werden durch ein Stellglied thermisch bedingte und verschleißbedingte Abstandsänderungen, die wegen ihrer zu erwartenden Größe durch die Amplitudenregelung nicht mehr kompensiert werden können, zwischen dem Schneidwerkzeug und der Sonotrode kompensiert, so daß die voreingestellte Berührungszeit konstant gehalten wird.

Dadurch wird der reale Abstand bzw. die reale Spaltbreite erfaßt. Abweichungen von der Solleinstellung werden unabhängig von Einflußfaktoren automatisch kompensiert. Es werden konstant gute und reproduzierbare Schweiß- und Schneidergebnisse sowie ein minimierter Verschleiß des Schneidwerkzeuges und der Sonotrode gewährleistet.

Nach einer Ausführungsform der Erfindung werden durch eine geeignete Hebelmechanik zwei oder mehrere mittlere Spaltbreiten konstant gehalten, selbst dann, wenn zum Beispiel durch Abnutzung eines Schneidpunktes nachgeregelt werden muß. Die Spaltbreite der nachfolgenden Stufe ist jeweils kleiner oder gleich groß wie die Spaltbreite der vorhergehenden Stufe. Dadurch ist zum Beispiel ein Schweißen und Schneiden mit einem Verschleißausgleich beim Schneiden gewährleistet. Da die Schweiß- und Schneidgeometrien voneinander unabhängig sind, ist es zum Beispiel möglich, breit zu verschweißen und mit einem spitzen Winkel zu schneiden.

Beim getrennten bzw. zweistufigen Schweißen und Schneiden erhöhen sich ohne Minderung der Kantenqualität die Bearbeitungsgeschwindigkeiten erheblich, weil beim Schweißprozeß mehr Energie in das Material eingetragen werden kann, da das Material beim ersten Behandlungsprozeß noch nicht getrennt wird.

Die verwendeten Werkzeuge können unterschiedlich ausgestaltet und verwendet werden, zum Beispiel kann das nichtberührende Werkzeug drehbar gelagert werden und eine profilierte Oberfläche aufweisen.

Es kann auch ein Werkzeug schwingend und ein Werkzeug feststehend ausgebildet werden.

Vorteilhafte Weiterbildungen der Erfindung nach Anspruch 1 ergeben sich aus den weiteren Unteransprüchen.

Die Erfindung soll nachstehend anhand einer Zeichnung an einem Ausführungsbeispiel einer Schneideinrichtung näher erläutert werden. Es zeigen:
- Fig. 1 :: die schematische Darstellung einer Ultraschall-Schneideinrichtung,
- Fig. 2:: eine schematische Darstellung der Regelungsstruktur und
- Fig. 3:: die schematische Darstellung einer weiteren Ausführungsform.

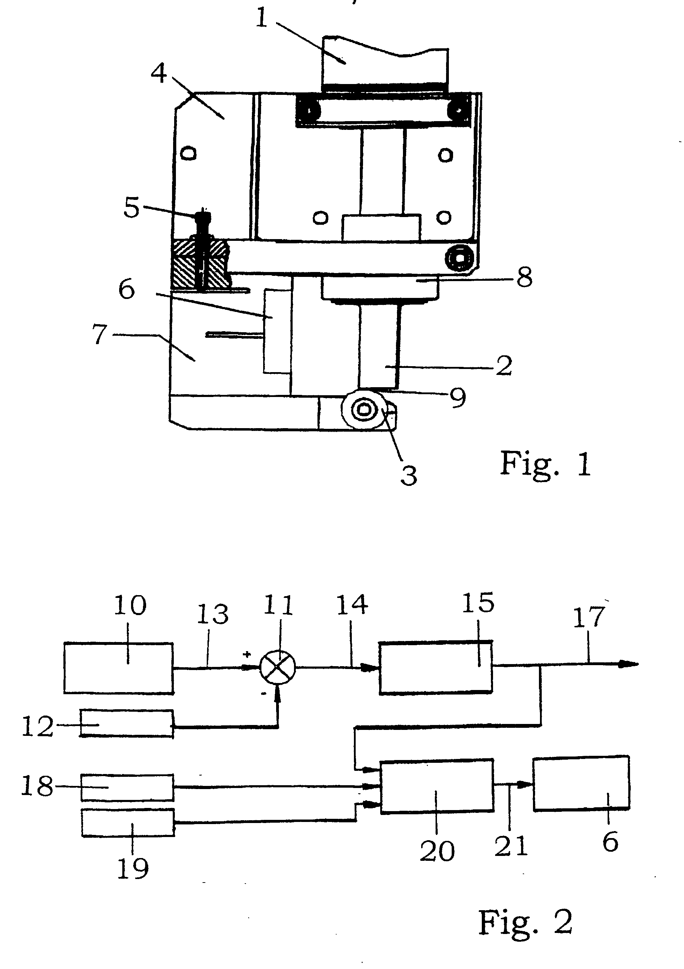

Entsprechend der Darstellung in der Fig. 1 besteht die Ultraschall-Schneideinrichtung aus einem Ultraschall-System 1, einer Sonotrode 2, die über einen schwingungsfreien Flansch 8 mit einer Befestigungsplatte 4 verbunden ist, einem Koppelglied 7, an dem ein Schneidwerkzeug 3, hier eine Schweiß- und Schneidplatte, befestigt ist, einer Stellschraube 5, hier eine Mikrometerschraube, mit der ein Spalt 9 zwischen der Sonotrode 2 und dem Schneidwerkzeug 3 mechanisch einstellbar ist, und aus einem thermischen Stellglied und einem Hebelsystem 6, hier ein Aktuator, zur Kompensation von thermisch bedingten und verschleißbedingten Abstandsänderungen zwischen der Sonotrode 2 und dem Schneidwerkzeug 3 (Spalt 9).

Die Ultraschalleistung wird über die Sonotrode 2 des Ultraschall-Systems 1, welche als Amplitudentransformator wirkt, an das Schneidwerkzeug 3 geleitet. Durch die zu Ultraschallschwingungen in Längsrichtung erregte Sonotrode 2 wird ein Schweiß- und/oder Schneidvorgang dadurch bewirkt, daß während eines kurzen Bruchteils der Schwingungsperiode sich das zu schneidende Material und das Schneidwerkzeug 3 in kraftschlüssigem Eingriff befinden. Wenn das zu schneidende Material auch verschweißt werden soll, dann wird durch eine entsprechende Formgebung der Sonotrode und des Gegenwerkzeugs sowie durch die Materialeigenschaften das Material durch die Schwingungen außerdem so gewalkt, daß eine für das Verschweißen des Materials ausreichend hohe Temperatur erreicht wird.
Die Regelung nach der Fig. 2 besteht aus zwei Regelkreisen. Der erste Regelkreis ist ein schneller Regelkreis, mit dem auf elektronischem Wege laufend die Berührungszeit von Sonotrode 2 und Schneidwerkzeug 3 gemessen und durch Veränderung der Amplitude des schwingenden Systems 1 so korrigiert wird, daß die voreingestellte Berührungszeit zwischen dem Schneidwerkzeug 3 und der Sonotrode 2 konstant gehalten wird.

Der Referenz- bzw. der voreingestellte Sollwert 12 der Berührungszeit wird aus einer Voreinstellung (Grundeinstellung) des Spaltes 9 mittels einer Mikrometerschraube 5 abgeleitet. Dabei erfolgt die mechanische Einstellung des Spaltes 9 so, daß die Berührungszeit sehr gering ist, also einen Wert gegen Null aufweist (Fig. 1).

Der Sollwert 12 der Berührungszeit kann auch durch andere Verstelleinrichtungen mechanisch und/oder elektronisch, auch opto-elektronisch, manuell oder automatisch eingestellt werden, zum Beispiel mittels Piezoelement. Wenn eine Konstanthaltung über längere Zeiträume zu gewährleisten ist, dann kann eine automatische Nachstellung evtl. auch unter Berücksichtigung des Sonotrodenverschleißes erforderlich sein.

Die Berührungszeit wird elektronisch in einer Meßschaltung 10 (Fig. 2) gemessen und einer Auswerteschaltung 11 zugeführt.

Bei einem schnellen Lastwechsel, zum Beispiel wenn die Materialbahn in den Spalt 9 einläuft, wird das geringfügige elastische Nachgeben der starren Anordnung zwischen der Sonotrode 2 und dem Schneidwerkzeug 3 dadurch schnell, d.h. in wenigen Millisekunden, ausgeglichen, daß die Amplitude sofort vergrößert wird, bis der voreingestellte Sollwert 12 der Berührungszeit wieder erreicht ist. Die entgegengesetzte Regelung erfolgt beim Auslauf der Materialbahn aus dem Spalt 9, indem die Amplitude der Schwingung verringert wird.

Aus der Messung der Berührungszeit ergibt sich eine Impulsdauer als zur Berührungszeit proportionales Signal 13, welche mit der fest voreingestellten Impulsdauer (Sollwert) 12 in der Auswertungsschaltung 11 verglichen und zu einem Korrektursignal 14 der Impulsdauer verarbeitet und einem Amplitudenstellglied 15 zugeführt wird, der eine Vergrößerung oder Verkleinerung der Schwingungsamplitude über das Amplituden-Korrektur-Signal 17 bewirkt.

Mit dem ersten Regelkreis ist ein zweiter, etwas trägerer Regelkreis verbunden, mit dem über ein thermisches Stellglied 6 (Aktuator, Fig. 1) und ein Hebelsystem thermisch und verschleißbedingte Abstandsänderungen zwischen dem Schneidwerkzeug 3 und der Sonotrode 2 ausgeglichen werden. Es werden alle thermisch bedingten Abstandsänderungen (Spaltänderungen) kompensiert.

Die fest voreingestellten Referenzwerte 18,19 für die Aktivierung und Deaktivierung des thermischen Stellgliedes 6 werden zusammen mit dem Korrektursignal 17 für die Amplitudenverstellung einem Ein-/Aus-Temperaturschalter 20 zugeführt, dessen Ausgangssignal 21 dem thermischen Stellglied 6 zugeführt wird.

Aus der Festlegung eines optimalen Arbeitsbereiches für die Berührungszeit werden Grenzwertsignale definiert, die zur mechanischen Grundeinstellung des mechanischen Gesamtsystems benutzt werden.

Das Amplituden-Korrektur-Signal 17 wirkt in einem definierten Signalbereich, bei dessen Verlassen die Aktivierung oder Deaktivierung des thermischen Stellgliedes 6 erfolgt.

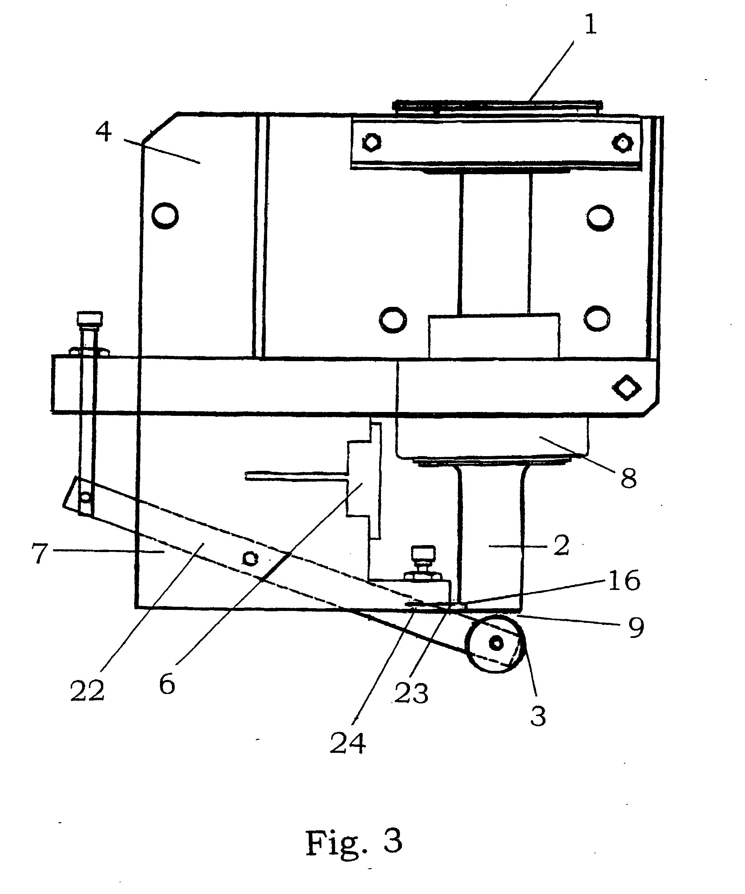

In der Fig. 3 ist eine Ausführungsform gezeigt, bei der mit einer Hebelmechanik 22 und einer Verstelleinrichtung 24 zwei Spaltbreiten 9 konstant gehalten werden können.

Im Gegensatz zum Ausführungsbeispiel nach Fig. 1, in welchem die Berührfläche identisch mit der Gegenfläche ist, wird in diesem Ausführungsbeispiel die Berührfläche 23 zwischen einem Sonotrodenabsatz 16 und einer justierbaren Zunge 24 gebildet. Die Gegenfläche ist hier das Schweißwerkzeug 3, welches über die Hebelmechanik 22 mit der Sonotrode 2 einen konstanten Spalt 9 bildet. Es wird in diesem Falle nicht getrennt. Möglich ist jedoch der Einsatz eines Schneidwerkzeuges, welches ein Material teilweise schneidet.

Ein Verschleiß, wie er bei dem direkten Kontakt zwischen Werkzeug 3 und Sonotrode 2 auftritt, findet hier nicht statt und ist auch nicht nachzuregeln. Es werden jedoch hierbei zwei mittlere Spaltbreiten, nämlich die der Berührfläche 23 und die der Gegenfläche 3 konstant gehalten.
Eine nicht dargestellte Variante weist zwei Gegenflächen auf, von denen eine durch eine Berührfläche gebildet wird, bei welcher zum Beispiel geschweißt und anschließend getrennt wird. In diesem Falle wird der Verschleiß des Schneidwerkzeuges nachgeregelt, ohne daß sich der Schweißspalt verändert.

### Bezugszeichenliste

- 1: Ultraschall-System
- 2: Sonotrode
- 3: Schneidwerkzeug
- 4: Befestigungsplatte
- 5: Stellschraube
- 6: Stellglied (Aktuator)
- 7: Koppelglied
- 8: Flansch
- 9: Spalt
- 10: Meßschaltung
- 11: Auswerteschaltung
- 12: Sollwert-Impulsdauer-Signal
- 13: Impulsdauer-Signal
- 14: Korrektursignal
- 15: Amplitudenstellglied
- 16: Sonotrodenabsatz
- 17: Amplituden-Korrektur-Signal
- 18: Referenzwert
- 19: Referenzwert
- 20: Ein-/Aus-Temperaturschalter
- 21: Ausgangssignal
- 22: Hebelmechanik
- 23: Berührfläche
- 24: Stellglied (justierbare Zunge)

## Patentansprüche

1. Verfahren zum Konstanthalten der mittleren Spaltbreite zwischen einer Sonotrode (2) eines Ultraschall-Systems (1) und einem als Gegenfläche ausgebildeten Werkzeug (3) einer Ultraschall-Schneideinrichtung zum Schneiden und/oder Verschweißen von unterschiedlichen Materialien, wie zum Beispiel von Kunststoffolien, kunststoffhaltigen Textilgeweben, unter Verwendung einer Verstelleinrichtung,
**dadurch gekennzeichnet, daß**
die Berührungszeit zwischen der Sonotrode (2) und einer Berührfläche (23) zum Konstanthalten des Abstandes zwischen der Sonotrode (2) und mindestens einer Gegenfläche (3) über eine Regelung konstant gehalten wird.

2. Verfahren nach Anspruch 1,
**dadurch gekennzeichnet, daß**
die Berührungszeit konstant gehalten wird, indem mit einem ersten schnellen Regelkreis mit elektronischen Mitteln laufend die Amplitude des Ultraschall-Systems (1) korrigiert und damit die Berührungszeit bei schnellem Lastwechsel konstant gehalten wird und mit einem zweiten langsameren Regelkreis, dessen Regelzeit aber schneller ist als die Temperaturänderung des Systems (1), durch mindestens ein Stellglied (6) thermisch bedingte und verschleißbedingte Abstandsänderungen zwischen dem Schneidwerkzeug (3) und der Sonotrode (2) kompensiert werden, so daß die voreingestellte Herührungszeit konstant gehalten wird.

3. Verfahren nach Anspruch 2,
**dadurch gekennzeichnet, daß**
als Stellglied (6) zur Kompensation der verschleißbedingten Abstandsänderungen eine Hebelmechanik (22) angeordnet wird, mit der mindestens zwei voreingestellte mittlere Spaltbreiten konstant gehalten werden, wobei die Spaltbreite der jeweils nachfolgenden Stufe kleiner oder gleich groß wie die vorhergehende ist.

4. Verfahren nach den Ansprüchen 1 bis 3,
**dadurch gekennzeichnet, daß**
parallele Gegenflächen (3) mit jeweils einer eigenen Verstelleinrichtung vorgesehen werden, wobei die ebenfalls parallelen Berührflächen (23) nacheinander periodisch abgetastet werden.

5. Verfahren nach Anspruch 2,
**dadurch gekennzeichnet, daß**
die beiden Regelkreise in ihrer Wirksamkeit aufeinander abgestimmt werden, indem die Aktivierung/Deaktivierung des mindestens einen Stellgliedes (6) mit dem definierten Signalbereich des Amplituden-Korrektursignals (17) gesteuert wird.

6. Verfahren nach den Ansprüchen 1 bis 5,
**dadurch gekennzeichnet, daß**
eine Voreinstellung des Sollwertes (12) für die Berührungszeit zwischen der Sonotrode (2) und der Berührfläche (23) mittels einer Verstelleinrichtung (5) wie Mikrometerschraube, Piezoelement, Aktuator so vorgenommen wird, daß die gemessene Berührungszeit sehr gering ist und gegen Null geht.

7. Verfahren nach den Ansprüchen 2 bis 6,
**dadurch gekennzeichnet, daß**
als Stellglied (6) für die Kompensation der thermisch bedingten und verschleißbedingten Abstandsänderungen mindestens ein Aluminiumteil angeordnet wird.

8. Verfahren nach den Ansprüchen 1 bis 7,
**dadurch gekennzeichnet, daß**
der Schneid- und/oder Schweißvorgang im intermittierenden Betrieb vorgenommen wird.

9. Verfahren nach den Ansprüchen 1 bis 8,
**dadurch gekennzeichnet, daß**
das Werkzeug (3) an der schwingenden Sonotrode (2) angebracht ist und die mittlere Spaltbreite zwischen diesem Werkzeug (3) und einem mit diesem Werkzeug (3) zusammenwirkenden Gegenlager gebildet wird.

## Claims

1. Method for the constant maintenance of the mean gap between a sonotrode (2) of an ultrasonic system (1) and a tool (3) of an ultrasonic cutting device designed as a counter surface, for cutting and/or welding of various types of materials such as, for example, synthetic foils, textile fabrics containing synthetic substances, with the use of an adjusting device,
**wherein**
the contacting time between the sonotrode (2) and a contacting surface (23) for maintaining a constant clearance between the sonotrode (2) and at least one counter surface (3) is kept constant by way of a control system.

2. Method according to Claim 1,
**wherein**
the contacting time is kept constant where, with a first quick control circuit with electronic means, the amplitude of the ultrasonic system (1) is continuously corrected and, subsequently, the contacting time at quick cyclic load is kept constant, and with a second and slower control circuit whose control time, however, is faster than the temperature change of the system (1), by means of at least one actuating element (6) thermally-related and wear-related clearance changes between the cutting tool (3) and the sonotrode (2) are compensated, so that the pre-set contacting time is kept constant.

3. Method according to Claim 2,
**wherein,**
as an actuating element (6) for the compensation of the wear-related clearance changes, a lever mechanism (22) is arranged, with which at least two pre-set mean gap widths are kept constant, where the gap width of the following stage in each case is smaller or equally as large as the previous one.

4. Method according to the Claims 1 to 3,
**wherein,**
parallel counter surfaces (3) are envisaged, each having its own adjusting device, where the likewise parallel contacting surfaces (23) are scanned periodically in successive order.

5. Method according to Claim 2,
**wherein,**
both control circuits are tuned to each other with regard to their effectiveness, in which the activation / deactivation of at least one actuating element (6) is controlled with the defined signal range of the amplitude correction signal (17).

6. Method according to the Claims 1 to 5,
**wherein,**
a pre-setting of the setpoint (12) for the contacting time between the sonotrode (2) and the contacting surface (23) is performed in such a way with an adjustment device (5) such as a micrometer screw, piezo element, actuator, that the measured contacting time is very minor and approaches zero.

7. Method according to the Claims 2 to 6,
**wherein,**
as an actuating element (6) for the compensation of the thermally-related and wear-related clearance changes, at least one provable aluminium part is arranged.

8. Method according to Claims 1 to 7,
**wherein,**
the cutting and/or the welding is performed in the intermitting operation.

9. Method according to Claims 1 to 8,
**wherein,**
the tool (3) is applied to the vibrating sonotrode (2) and the mean gap width is formed between this tool (3) and a counter bearing acting with this tool (3).

## Revendications

1. Procédé pour maintenir constante la largeur moyenne de fente entre une sonotrode (2) d'un système à ultrasons (1) et un outil (3) formé en tant que contre-surface d'un dispositif de découpe à ultrasons pour couper et/ou souder différents matériaux, comme par exemple, des feuilles de plastique, des tissus contenant de la matière plastique en utilisant un dispositif de réglage, **caractérisé en ce que** le temps de contact entre la sonotrode (2) et une surface de contact (23) pour maintenir constante la distance entre le sonotrode (2) et au moins une contre-surface (3) est réglé pour rester constant.

2. Procédé selon la revendication 1, **caractérisé en ce que** le temps de contact est maintenu constant par la correction de l'amplitude du système à ultrasons (1) en permanence par un premier circuit de réglage rapide avec des moyens électroniques; ceci permettant ainsi de maintenir le temps de contact constant en cas de changement de charge rapide et **caractérisé en ce que** l'on compense avec un deuxième circuit de réglage plus lent dont le temps de réglage est, par contre, plus rapide que le changement de température du système (1), des modifications de distance liées à la température et à l'usure entre l'outil de découpe (3) et la sonotrode (2) grâce à au moins un élément de réglage (6) de sorte que le temps de contact préréglé soit maintenu constant.

3. Procédé selon la revendication 2, **caractérisé en ce qu'**un mécanisme de levier (22) est disposé en tant qu'élément de réglage (6) pour compenser les modifications de distance liées à l'usure, grâce auquel mécanisme de levier au moins deux largeurs de fente moyennes préréglées sont maintenues stables; la largeur de fente de chaque étape suivante étant plus petite ou de la même taille que la précédente.

4. Procédé selon les revendications 1 à 3, **caractérisé en ce que** des contre-surfaces (3) parallèles sont prévues avec à chaque fois un dispositif de réglage propre; les surfaces de contact (23) étant aussi parallèles, se trouvant scannées l'une après l'autre périodiquement.

5. Procédé selon la revendication 2, **caractérisé en ce que** les deux circuits de réglage sont déterminés mutuellement dans leur action **en ce que** l'activation /la désactivation d'au moins un élément de réglage (6) est commandée par la zone de signal définie du signal correcteur d'amplitude (17).

6. Procédé selon une des revendications 1 à 5, **caractérisé en ce qu'**on procède à un préréglage de la valeur de consigne (12) pour le temps de contact entre la sonotrode (2) et la surface de contact (23) au moyen d'un dispositif de réglage (5) tel une vis micrométrique, un élément piézoélectrique, un actuateur de sorte que le temps de contact mesuré soit très court et s'approche de zéro.

7. Procédé selon les revendications 2 à 6, **caractérisé en ce qu'**on a disposé au moins une partie en aluminium comme élément de réglage (6) pour compenser les modifications de distance liées à la température et à l'usure.

8. Procédé selon les revendications 1 à 7, **caractérisé en ce que** le processus de découpage et/ou de soudage est entrepris dans un fonctionnement intermittent.

9. Procédé selon les revendications 1 à 8, **caractérisé en ce que** l'outil (3) est monté sur la sonotrode (2) oscillante et qu'une largeur de fente moyenne se forme entre cet outil (3) et un contre-palier agissant ensemble avec cet outil (3).
